## Europäisches Patentamt
## European Patent Office
## Office européen des brevets

(19)

(11) Numéro de publication: **0 080 422**
**B1**

(12)

# FASCICULE DE BREVET EUROPÉEN

(45) Date de publication du fascicule du brevet:
**08.03.89**

(51) Int. Cl.⁴: **A 22 C 11/12**

(21) Numéro de dépôt: **82420156.0**

(22) Date de dépôt: **17.11.82**

---

(54) **Machine automatique permettant de ligaturer, selon un cycle préétabli, au moyen d'un fil, ficelle ou analogue, des objets pleins ou creux.**

---

(30) Priorité: **20.11.81 FR 8122112**

(43) Date de publication de la demande:
**01.06.83 Bulletin 83/22**

(45) Mention de la délivrance du brevet:
**08.03.89 Bulletin 89/10**

(84) Etats contractants désignés:
**AT BE CH DE GB IT LI LU NL SE**

(56) Documents cité:
**CH-A-206 332**
**DE-A-1 507 973**
**DE-B-1 187 512**

(73) Titulaire: **ETABLISSEMENTS CHARLES FRERES & CIE, F-42580 L'Etrat (FR)**

(72) Inventeur: **Pujol, Yves, 15 rue Plantevin, F-81000 Albi (FR)**

(74) Mandataire: **Dupuis, François, Cabinet Charras 3 Place de l'Hôtel- de- Ville, F-42000 St.Etienne (FR)**

---

LIBER, STOCKHOLM 1989

EP 0 080 422 B1

## Description

L'invention concerne une machine automatique permettant de ligaturer, selon un cycle préétabli, au moyen de fil, ficelle ou analogue, des objets pleins ou creux.

Selon une application non limitative, l'invention est utilisée dans la fabrication des saucissons, saucisses et autres produits similaires. La ligature réalisée est obtenue par un noeud auto-bloquant du type noeud à cabestan.

On connaît déjà des machines automatiques pour ficeler les saucissons, saucisses et produits similaires, en ligaturant les extrémités dudit produit par un noeud dit "cabestan". De telles machines ont été décrites par exemple, dans les Brevets Français n° 2 334 300, 2 367 429, 2 435 910 et 2 447 148, au nom du Déposant de la présente invention ou le mentionnant comme inventeur. Selon les techniques décrites dans l'art antérieur précité, les machines ficellent les produits par un noeud cabestan, puis, des moyens coupent automatiquement ladite ficelle, après la réalisation des noeuds. Il y a alors lieu d'effectuer une opération manuelle en nouant deux brins libres de ficelle de saucisson, saucisse ou analogue, afin de pouvoir utiliser l'attache ou moyen de liaison comme moyen de suspension des produits. Par ailleurs, avec les machines selon l'art antérieur cité, la présence d'un opérateur est nécessaire pour disposer le produit dans la zone de nouage et pour assurer son maintien pendant l'opération.

La présente invention a pour but de remédier à ces inconvénients.

On connaît également le brevet KALLE DE-A-1 507 973 qui concerne une méthode et un dispositif pour l'attache des boyaux de saucisses.

Selon la description du brevet allemand, la machine comprend un automatisme pour l'approvisionnement du fil de nouage, un mécanisme de formation du noeud de liage au moyen d'une tête d'enroulement (7), une pince assurant la préhension du produit dans la tête d'enroulement, le ligaturage et la coupe du fil.

Comparativement, la Demande se distingue par la mise en oeuvre particulière des différents mécanismes, par une automatisation de la présentation des produits en chapelet liés par fil, et ce, sans intervention manuelle, le ligaturage de chacune des extrémités des produits préalablement tassés, et la coupe selon un pas préétabli, d'un ou plusieurs produits en chapelet liés par le fil.

La présente demande offre de nouvelles fonctions nullement décrites dans le brevet KALLE.

L'invention telle qu'elle est caractérisée dans les revendications résout le problème consistant à créer une machine automatique fonctionnant seule, sans qu'une opération manuelle ultérieure soit nécessaire.

Un autre but de l'invention était de mettre au point une machine automatique permettant de combiner les actions de coupe en longueur des chapelets de saucissons, saucisses ou produits similaires, avec les actions de nouage, ceci pour obtenir différentes sortes de produits commercialisés, la ficelle pouvant être coupée, par exemple, à chaque noeud ou tous les deux noeuds, tous les quatre noeuds, ou autrement selon les besoins. Dans un but de simplification le terme "fil" désignera de manière générique, tout lien approprié, fil, ficelle, cordelette, ruban, etc...

Selon l'invention, la machine est remarquable en ce qu'elle comprend des automatismes permettant l'approvisionnement en continu du fil de nouage, la mise en tension du fil, la mise en forme du fil pour établir une ligature, la présentation en continu des produits à ligaturer et le guidage du produit à ficeler, le sectionnement des extrémités de chaque produit, le ligaturage de chacune des extrémités et la coupe, ladite machine comprenant un bâti profilé et agencé pour supporter les mécanismes de ladite machine, leurs moyens de guidage et d'articulation, lesdits mécanismes étant caractérisés en ce que:

- Le mécanisme contrôlant l'amenée en continu et la distribution du fil comprend une pièce avec un mors fixe et mobile autorisant le déplacement du fil et son serrage en position;

- Le mécanisme assurant le serrage du fil puis son déroulement de l'endroit de serrage vers la zone d'entrelacement parallèlement au plan de base vertical du bâti selon une trajectoire rectiligne contrôlée comprend un mors fixe et un mors mobile profilés saisissant le fil et étant guidés en déplacement par des moyens de guidage;

- Le mécanisme de mise en forme de la ligature comprend deux doigts de relevage du fil, deux crochets pour tirer le fil vers le bas et deux lames pour tirer les pièces de fil latéralement, autorisant ainsi la mise en forme du fil pour la ligature par déformation sucessives et complémentaires de sa trajectoire en vue de ligaturer le produit sous la forme d'un noeud dit cabestan selon une programmation préétablie;

- Le mécanisme assurant la présentation du produit à ligaturer comprenant une semelle de chargement du produit déplaçable jusqu'à présenter le produit près de l'endroit de la ligature et agencé avec un outil de coupe sectionnant le produit à ligaturer préalablement à son transfert et son évacuation dans la zone de ligaturage;

- Le mécanisme de préhension du produit comprenant une pince de préhension se déplaçant perpendiculairement au sens de déplacement du fil et venant à l'intérieur et en débordement d'un bloc de devêtissage pour la saisie du produit et son introduction dans la zone de ligature par retrait de la pince et tassement du contenu dans le boyau en appui contre ledit bloc;

- Un mécanisme est disposé entre le mécanisme d'amenée du fil et le mécanisme de serrage du fil, assurant une double fonction, selon la position: d'une part, de présentation du fil vers le mécanisme de serrage et d'autre part, de serrage du noeud après dépose de la ligature sur le produit;

- Un outil coupe fil associé avec le mécanisme de serrage du fil.

Les avantages obtenus grâce à cette invention consistent en l'automatisation complète de la machine permettant de présenter en continu des produits pleins ou creux à ligaturer, d'effectuer les actions de coupe en longueur des chapelets de saucissons, saucisses et produits similaires, avec les opérations de nouage, la ficelle utilisée comme moyen de ligaturage et nouage pouvant être coupée de manière variée et programmée en vue d'obtenir diverses sortes de produits à commercialiser.

L'invention est exposée ci-après en détail à l'aide des dessins.

La figure 1 est une vue en perspective illustrant en position de repos, l'ensemble du mécanisme autorisant la mise en forme d'une ligature, en vue d'obtenir un noeud dit "cabestan" et le serrage du noeud; certains moyens tels que le mécanisme de dévêtissage n'étant pas représentés sur cette figure afin de faciliter la compréhension de l'invention;

La figure 2 est une vue en perspective illustrant les mécanismes complémentaires à ceux illustrés figure 1, à savoir: les mecanismes assurant l'approvisionnement en produits à ligaturer et le mécanisme permettant d'effectuer l'opération de dévêtissage;

Les figures 3, 4, 5, 6, 7, 8 et 9 sont des vues partielles à grande échelle, illustrant le positionnement des mécanismes aux différentes phases du cycle de formation des noeuds;

La figure 10 est une vue en perspective illustrant l'adaptation du mécanisme coupe fil avec le mécanisme d'arrivée du fil.

La machine automatique permettant de ligaturer les saucissons, saucisses ou analogues, comprend un bâti (1) profilé et agencé pour supporter divers mécanismes, leurs moyens de quidage et d'articulation.

Le bâti (1) supporte essentiellement les dispositifs suivants, lesquels seront décrits successivement en détail, ci-après: le dispositif d'amenée de fil, le dispositif serre-fil, le mécanisme permettant de mettre en position le fil avant la formation de la ligature, le dispositif de serrage du noeud et le bloc de dévêtissage.

Le dispositif serre-fil (2) est constitué d'un mors fixe (2a) et d'un mors mobile (2b). Le mors fixe profilé (2a) comprend une partie médiane (2a1) se prolongeant à ses extrémités par deux ailes orientées, opposées, respectivement (2a2 et 2a3), l'aile (2a3) définissant la partie mors, présentant un prolongement horizontal en retour (2a4). Le mors mobile (2b) se présente sous la forme d'un profilé venant en juxtaposition sur l'une des faces de l'aile (2a3) du mors fixe. Ce mors mobile (2b) est solidarisé à son extrémité supérieure, à la tige d'un vérin (3), lui-même lié par son point d'attache à l'aile supérieure (2a2) du mors fixe. L'ensemble de ce dispositif serre-fil (2) est déplacé transversalement sous l'action d'un vérin (4). Le guidage rectiligne est obtenu par des tiges cylindriques et paralléles (5a - 5b) disposées de part et d'autre de la tige du vérin (4) et coulissant dans des ouvertures appropriées réalisées dans l'épaisseur (1a1)d'un bloc (1a) formé sur le bâti (1), dans un plan perpendiculaire à son plan arrière vertical. Ce bloc (1a) présente une structure frontale étagée avec notamment, les parties (1a1), (1a2), (1a3). Les tiges (5a - 5b) et la tige (4a) du vérin (4) sont solidarisées à la partie médiane (2a1) du mors fixe.

Ce dispositif serre-fil (2) ainsi décrit, associé à des moyens d'entraînement, assure pour chaque cycle, une ouverture et une fermeture des mors (2a - 2b) entre lesquels est positionné le fil (17), ainsi qu'une translation aller-retour de l'ensemble. Dans la position initiale, il permet la préhension du fil, tandis que dans la position extrême de déplacement, il présente le fil devant le mécanisme assurant la mise en forme de la ligature et qui est décrit ci-après.

Les éléments de ce mécanisme sont décrits par rapport à la position horizontale du fil (17) destiné à définir le ligaturage.

Ledit mécanisme comprend deux doigts de relevage du fil, (7) et (8), deux crochets (11a) et (11b) tirant vers le bas le fil (17), et deux lames (13) (14) tirant latéralement les brins du fil. Les doigts de relevage du fil (7) (8), indépendants ou non l'un de l'autre, sont fixés sur un arbre (6) parallàle à la direction de cheminement du dispositif serrefil (2). Les déux doigts (7) (8) sont disposés de part et d'autre d'un doigt fixe (10) lié de manière approprié au bâti (1). L'arbre (6) tourne en rotation à l'intérieur d'un alésage prévu dans le doigt fixe (10) et d'un alésage prévu dans la partie (1a2) du bloc (1a) du bâti. L'arbre (6) est solidaire d'une biellette (6a), elle-même reliée à la tige d'un vérin (9), lequel est disposé verticalement et dont le point d'attache (9^1) est lié à un plan d'appui horizontal (1b) du bâti (1) situé en-dessous du bloc (1a). Ce vérin (9) permet, lors du développement de sa tige, de transmettre un mouvement pivotant aux dogits (7 et 8), en vue de leur relevage pour accrocher le fil de modifier ainsi sa trajectorire, comme il sera décrit ultérieurement. Ces doigts (7 et 8) présentent sur leur face destinée à accrocher le fil, un profil en "V" formant rampe, permettant d'accrocher et de maintenir ledit fil en position relevée.

Ce mécanisme comprend en outre, deux crochets (11a - 11b) destinés à tirer vers le bas le fil (17) dans une direction perpendiculaire à la direction de translation du dispositif serre-fil (2). Ces crochets se présentent sous la forme de barrettes profilées solidaires à leur partie inférieure d'un plateau (11). Les barrettes sont disposées aux extrémités angulaires opposées du plateau (11), de manière à se situer de part et d'autre des lames (13 - 14). La barrette (11a) présente un profil droit se terminant à son extrémité supérieure par un bossage cylindrique horizontal et avant (11a1), ladite barrette se trouvant à gauche, en regardant les dessins, du doigt de relevage (7). La barrette (11b) présente au-delà de sa partie médiane, un déport (11b1) se prolongeant ensuite par une extrémité verticale (11b2) disposée dans un plan différent de celui du profil droit de la barrette (11a) et se terminant ensuite par un bossage cylindrique horizontal et avant (11b3). La partie supérieure de la barrette (11b) se situe entre le doigt fixe (10) et le doigt de relevage (8). Les barrettes ou crochets (11a - 11b) peuvent être déplacées verticalement au moyen d'un vérin (12) dont la tige est solidaire du plateau (11). Des tiges cylindriques et parallèles (12a - 12b), solidaires du plateau, assurent son guidage rectiligne; lesdites tiges coulissant dans le bloc horizontal (1b) précité, solidaire du bâti (1).

Le mécanisme comprend également deux lames (13 - 14) horizontales, juxtaposées l'une contre l'autre et animées d'un mouvement en translation opposé sous l'action des vérins (15) et (16), ceci dans une direction parallèle à la direction de déplacement du dispositif serre-fil. Les vérins (15) (16) sont solidarisés au bâti par des équerres (1f).

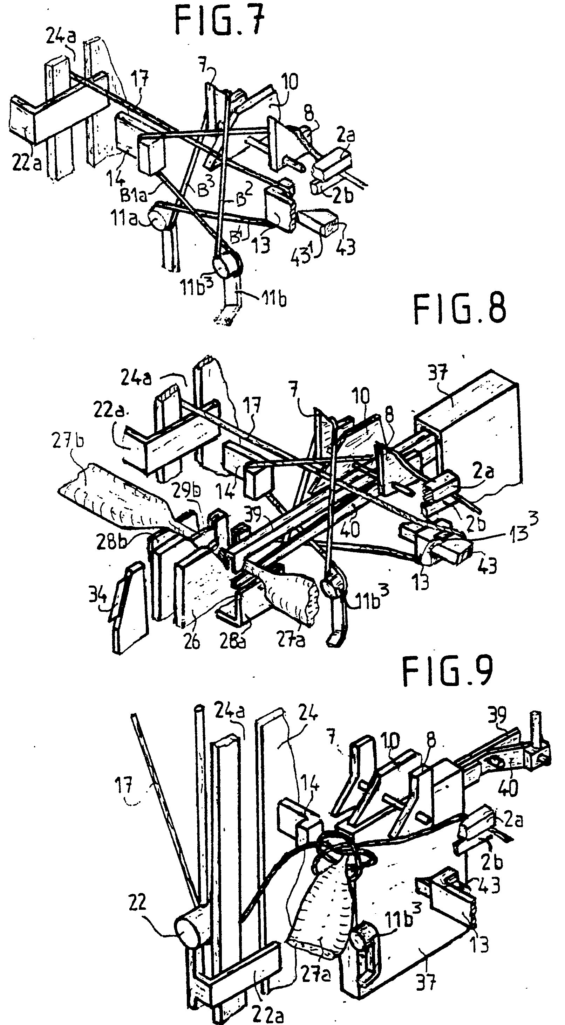

Les lames (13) (14) présentent chacune à une extrémité, une aile équerrée (13¹) (14¹) orientées d'une manière opposée l'une par rapport à l'autre, tandis que leur autre extrémité (13²) (14²) est agencée pour s'accoupler aux tiges des vérins (15) et (16). En position repos, les ailes (13¹) (14¹) des lames se situent dans des plans entre lesquels sont disposés successivement, le crochet (11a), le doigt de relevage (7), le doigt fixe (10), le crochet (11b) et le doigt de relevage (8). Par ailleurs, on doit noter que l'aile (13¹) de la lame (13) est évidée selon une fente (13³) de guidage, autorisant le passage du fil et permettant lors de la translation de la lame (13), l'encastrement du bec de décrochage (43) du fil, comme illustré figures 7, 8 et 9. Ce bec de décrochage (43) est fixé de toute manière appropriée directement ou indirectement, sur le bâti. En fin de course de séparation des lames (13) (14), le bec de décrochage (43) pénètre dans l'évidement et soulève le fil tracté par l'aile (13¹), annulant ainsi sa fonction d'accrochage. Ainsi qu'il apparaît, les lames sont associées à des moyens d'entraînement leur assurant, selon un cycle, des positions limites. Dans la position initiale, les deux lames (13) (14) sont juxtaposées puis, dans la position extrême, elles sont séparées l'une de l'autre après avoir accroché par leur aile équerrée, certains brins de fil qui seront précisés ultérieurement dans l'exposé du fonctionnement de la machine.

On décrit maintenant le dispositif d'amenée du fil vers le dispositif serre-fil (2) précédemment décrit, ainsi que le dispositif de serrage du noeud.

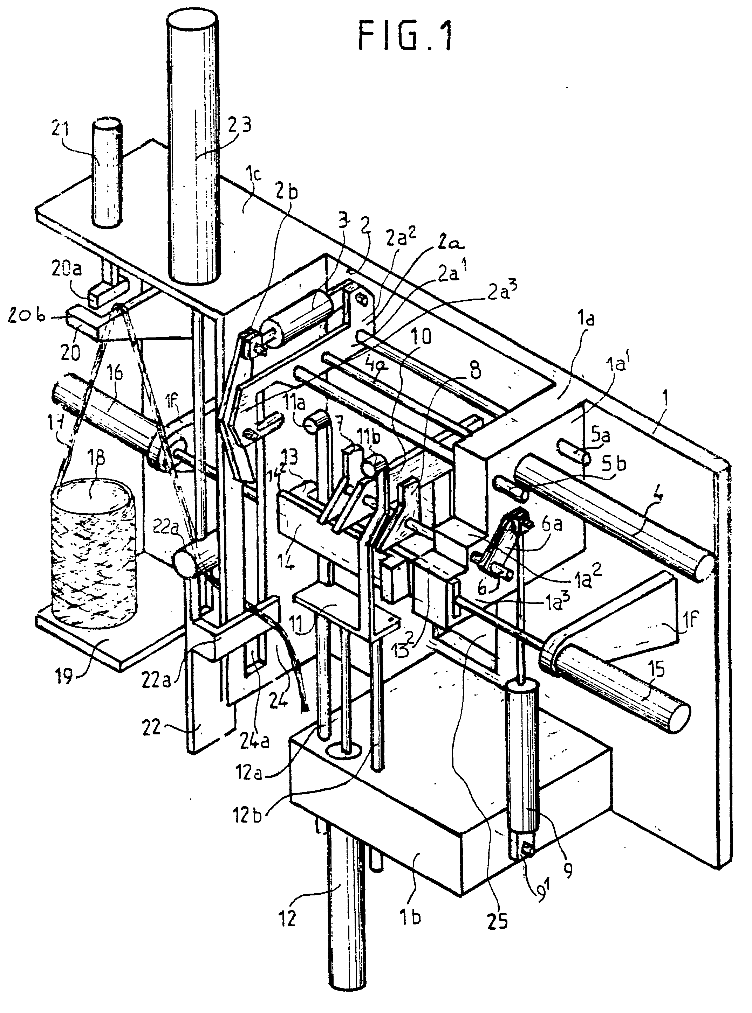

Préalablement, le bâti (1) présente près de l'une de ses extrémités, un plateau ou support horizontal (19) sur lequel est positionnée la pelote de fil (18) d'où se déroule le fil (17) selon un mouvement approprié. Le bâti (1) présente dans un plan supérieur au support (19), un plateau supérieur (1c) se prolongeant à sa droite en regardant la figure 1, par une paroi verticale (24) liée au bâti (1). Le plateau supérieur (1c) est aménagé pour recevoir deux vérins (21 - 23). La tige carrée du vérin (21) constitue le mors mobile (20a) d'une presse (20). Le mors fixe (20b) étant défini par un bras profilé sur lequel se déroule kle fil (17) et fixé de manière appropriée, au bâti; le fil (17) passant librement entre les mors lorsque le vérin (21) n'est pas actionné.

Concernant le dispositif de serrage du noeud, ce dernier comprend essentiellement, une plaque profilée (22) actionnée en déplacement vertical sous l'action du vérin (23) monté sur le plateau (1c) du bâti. La plaque précitée est aménagée pour présenter à son extrémité supérieure, un bossage cylindrique de renvoi (22a) sous lequel est établie, dans un plan médian et partiellement sur toute la longeur de la plaque, une lumière (22b) autorisant le passage du fil. De plus, la plaque (22) présente un bras déporté horizontal (22c) destiné à contourner la paroi verticale (24) du bâti pour la recouvrir partiellement sur une profondeur telle qu'il puisse se présenter devant la lumière verticale (24a) réalisée dans ladite paroi (24). Le fil (17) s'appuyant en amont sous le bossage cylindrique (22a), est guidé successivement dans les lumières (22b) et (24a) pour venir en appui sur le bras (22c).

Ainsi qu'il apparaît, le dispositif de serrage du noeud est associé à des moyens d'entraînement lui assurant un déplacement à chaque cycle, dans une direction parallèle à celle des barrettes (11a - 11b).

Le dispositif précité présente, selon sa position, une double fonction:
en position haute, il amène le fil (17) dans le dispositif serre-fil (2); en position basse, il assure le serrage du noeud par l'allongement de la trajectoire dudit fil (17) en appui sur le bossage cylindrique (22a), ainsi qu'il sera décrit ultérieurement.

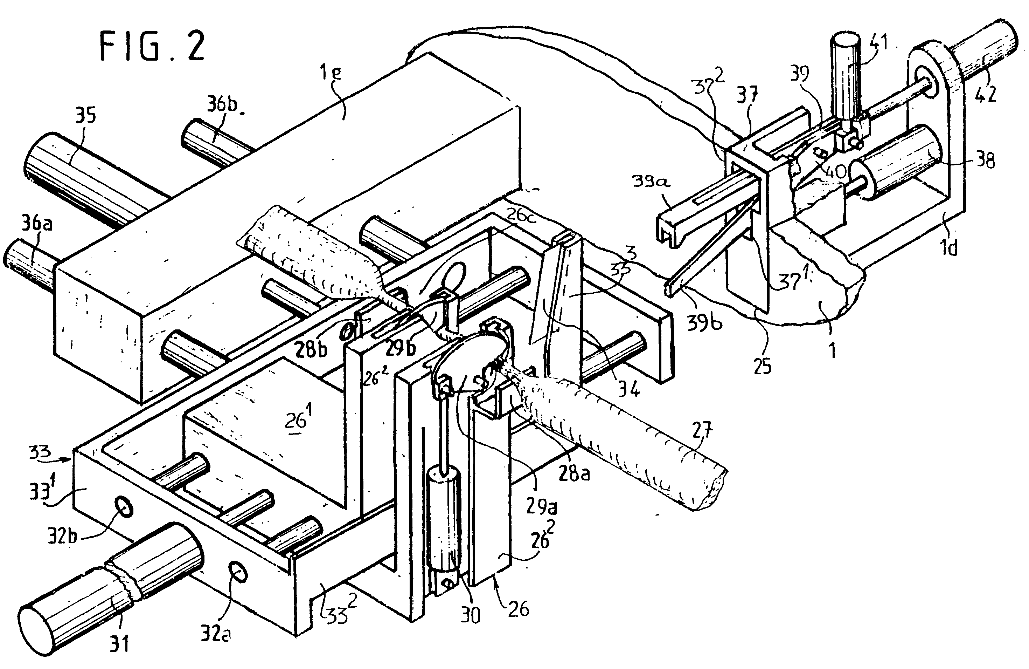

On décrit maintenant le bloc de dévêtissage de la machine qui a pour but de faire tomber à un moment précis, les brins du fil autour du produit à ligaturer. Ce bloc est référencé en (37) figure 2 principalement, et monté coulissant dans une ouverture (25) ménagée dans le bâti (1), cette ouverture etant illustrée figure 1. Le bloc de dévêtissage coulisse sous l'action d'un vérin (38) fixé de manière appropriée sur un support équerré (1d) solidaire du bâti (1). Le bloc de dévêtissage présente sur sa face frontale (37²) une ouverture profilée en "T" (37¹) à-travers laquelle peuvent se déplacer les mors d'une pince de préhension (39) du produit à ligaturer. Cette pince (39) comprend un mors fixe (39a) et un mors mobile (39b), l'ouverture de l'un par rapport à l'autre étant commandée par un vérin (41). Le corps de pince (39) se prolonge à son extrémité arrière (40) pour être solidarisé avec la tige d'un vérin (42) assurant son déplacement transversal à l'intérieur et en débordement extérieur de l'ouverture (37¹) du bloc de dévêtissage précité. Dans sa position initiale, la pince de préhension se situe en retrait par rapport aux moyens constituant le mécanisme de mise en forme du fil pour l'opération de ligature du produit. En position de développement maximum, les mors de la pince passent sous le doigt fixe (10) et dans l'espace libéré par la séparation des lames (13) (14), jusqu'au produit à saisir.

Il convient maintenant de décrire le dispositif de présentation du produit à ligaturer complétant la machine. Ce dispositif est illustré plus particulièrement à la figure 2 des dessins. On a représenté une semelle de chargement (26) présentant une embase horizontale (26¹) et deux corps verticaux (26²) parallèles entre eux, creux intérieurement et ouverts à leur partie supérieure pour autoriser le positionnement et le débattement angulaire de galets (29a 29b) actionnés par des vérins (30). La partie supérieure de ces corps présente en outre, une ouverture en "V" (26c) susceptible de recevoir la partie non remplie de viande du boyau constituant le chapelet de saucisses, saucissons ou analogues. De plus, ces corps (26²) présentent dans leur partie supérieure, des équerres (28a - 28b) situées dans le prolongement axial des ouvertures en "V" (26c), afin de supporter également la partie vide du boyau et le tassement de la partie pleine, à l'extérieur des équerres; on assure ainsi un bon maintien du boyau pour faciliter l'action de la pince de préhension (39), ainsi qu'il sera décrit ultérieurement.

Le dispositif de présentation du produit est associé à des moyens d'entraînement lui permettant des mouvemants dans deux directions, à savoir, une première direction perpendiculaire à celle du mouvement du dispositif serre-fil (2) et une seconde direction parallèle à la direction de ce dernier. A cet effet, la semelle de chargement (26) peut se déplacer sous la commande d'un vérin (31) et suivant un guidage rectiligne à l'intérieur d'un cadre-support (33), selon un mouvement correspondant à la première position. Ce guidage rectiligne est obtenu par des tiges cylindriques et parallèles (32a - 32b) disposées entre les côtés latéraux (33¹) dudit cadre support. Selon une caractéristique, ce cadre est ouvert, en ce sens que le côté longitudinal (33²) dudit cadre présente un bras équerré (33³) aménagé pour recevoir une lame de coupe (34); le bras équerré (33³) se situant en avant du côté latéral de fin de de course du support (33). Le bras longitudinal est disposé entre les corps (26²) de la semelle de chargement. On comprend que lors du déplacement en translation de la semelle (26), la lame de coupe (34) tranche la partie de boyau située entre les galets (29a) et (29b). En fin de translation, la partie de boyau située entre le galet de serrage (29a) et l'équerre (28a) est présentée entre les mors ouverts de la pince (39) de préhension, lorsque celle-ci est en position de sortie, ainsi qu'il sera décrit d'une manière plus détaillée lors de l'exposé sur le fonctionnement complet de la machine.

Le second mouvement de la semelle de chargement, dans la direction parallèle à celle du dispositif serre-fil, est obtenu par un vérin (35) agissant en poussée sur le cadre-support (33). Ce guidage est assuré par les tiges cylindriques et parallèles (36a - 36b) solidaires du support (33) et coulissant dans le bloc (1e) solidaire du bâti (1), ainsi qu'illustré figure 2. Le second mouvement de la semelle de chargement permet de présenter à l'action de pince de préhension (39), la partie de boyau vide située entre le galet d'appui (29b) et l'équerre (28b).

Selon une autre variante de réalisation, non illustrée, la semelle de chargement peut comprendre un seul corps (26²).

On peut prévoir un dispositif de commande des divers mouvements décrits précédemment, avec des capteurs et tous organes en général, aptes à traiter les informations qui leur sont communiquées.

Selon une possibilité de réalisation non exclusive, une lame coupe-fil et son dispositif d'actionnement sont positionnés à un endroit approprié pour agir ou non après chaque opération de ligaturage, ainsi qu'il sera décrit ultérieurement.

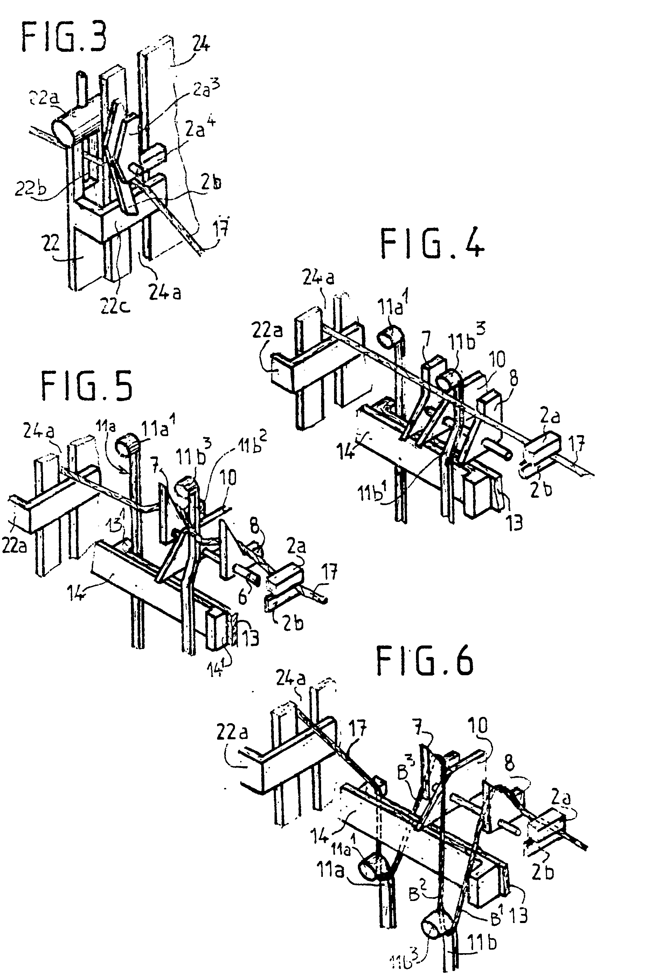

Il convient dès lors d'exposer de manière complète, le fonctionnement de la machine, en se référant plus particulièrement aux figures 3 à 9 des dessins.

Le cycle de fonctionnement comprend deux phases principales distinctes, correspondant successivement: à la préparation du noeud, au tassement de la viande dans le boyau, à la dépose du noeud autour du boyau et à son serrage sur le produit à ligaturer, dans une première phase; et au positionnement et à la coupe du produit à ligaturer, dans le cas de saucisses fabriquées en chapelet, dans une deuxième phase.

A) Préparation du noeud:

- Au debut du cycle opératoire, après serrage du noeud précédent, les mécanismes de la machine automatique sont illustrés dans la position représentée figure 1. Le brin du fil (17) est engagé dans la lumière (24a) de la paroi (24). Sous l'action du vérin (23), la plaque profilée (22) est tirée vers le haut, le fil en appui sur le bras (22c) se déplaçant dans la lumière oblongue (24a). En fin de course, le fil (17) est présenté, par l'intermédiaire du bras (22c) entre les mors ouverts (2a - 2b) du dispositif serre-fil (2). Cette position est illustrée figure 3. Pour permettre le déroulement du fil (17), le vérin (21) n'exerce aucune action sur le mors mobile (20a) à l'encontre du mors fixe (20b).

- Dans la phase suivante, le vérin (3) agit sur le mors mobile (2b) qui serre le fil (17) contre le mors fixe (2a). Le dispositif serre-fil (2) est ensuite déplacé transversalement sous l'action du vérin (4), en déroulant le fil (17). La plaque profilée (22) restant en position haute, le fil est déroulé selon une trajectoire sensiblement rectiligne, ledit fil passant devant les organes (7, 8, 10, 11a, 11b) constituant le mécanisme permettant de mettre en forme la boucle pour ligaturer le produit, ainsi qu'il apparaît figure 4.

- Dans la phase suivante, le vérin (9) est commandé pour faire tourner l'arbre (6) par l'intermédiaire de la biellette (6a), et conséquemment, les doigts de relevage (7, 8) liés à l'arbre (6). De par leur mouvement de basculement en arrière, les doigts (7, 8) saisissent le fil (17), déforment sa trajectoire initiale dans le même plan horizontal ou sensiblement, le fil étant correctement maintenu dans le profil en "V" desdits doigts. Par suite de ce mouvement de basculement, certaines parties du fil (17) viennent directement en appui contre le corps des barrettes ou crochets (11a - 11b) et plus particulièrement dans une position sensiblement située en dessous des bossages cylindriques (11a1 et 11b3), comme illustré figure 5.

- Dans la phase suivante, le vérin (12) est commandé pour provoquer le déplacement vers le bas des barrettes-crochets (11a - 11b). Par suite de ce mouvement, les bossages cylindriques viennent en contact avec les parties de fil sousjacentes, en tirant le fil vers le bas, modifiant ainsi sa trajectoire en deux endroits. De par la position relative des barrettes (11a - 11b) par rapport aux lames (13 - 14), la trajectoire de la partie de fil découlant de l'action de la barrette (11a), passe derrière la lame (13), tandis que la trajectoire de la partie de fil découlant de la barrette (11b), passe devant la lame (14), comme illustré figure 6. Sur cette même figure, ont été référencés les brins de fil obtenus: (B1) est le brin de fil tendu entre le doigt de relevage (8) et le bossage cylindrique (11b3) de la barrette (11b); (B2) est le brin tendu entre le bossage cylindrique (11b3) et le doigt de relevage (7); (B3) est le brin tendu entre le doigt de relevage (7) et le bossage cylindrique (11a1) de la barrette (11a).

- Dans la phase suivante illustrée figure 7, les lames (13) (14) coulissent l'une par rapport à l'autre dans un sens opposé, sous l'action de leur moyen de commande respectif (15, 16). L'aile équerrée (141) de la lame (14) accroche le brin de fil (B1) se trouvant sur sa trajectoire, définissant les brins (B1a et B1b). Le brin (B2) disposé en avant de la trajectoire par rapport au brin (B1) et reliant le doigt de relevage (7) au bossage cylindrique (11b3) est déplacé vers l'avant sous l'action du doigt fixe (10) par l'effet de la rampe (101) établie sur la face avant dudit doigt. Par ailleurs, l'aile équerrée (131) de la lame (13) accroche le brin (B4) situé en amont du bossage cylindrique (11a1) de la barrette (11a), ledit brin (B4) se trouvant sur la trajectoire de déplacement de la lame. Le brin (B3) reliant le doigt de relevage (7) au bossage cylindrique (11a1) se trouve en arrière, par l'action du doigt de relevage.

- Dans la phase suivante illustrée figure 8, la lame (13) arrive en fin de course de déplacement. L'aile équerrée (131) pénètre par son évidement (133), dans le bec de décrochage (43) fixé au bâti (1). Ce bec (43) présente sa partie avant formant rampe (431) sur laquelle prend appui le fil tracté (17) qui est progressivement dégagé de l'aile équerrée (131) de la lame (13). Le fil n'étant plus maintenu, il suffit d'exercer une légère traction sur le brin en provenance de la pelote (18) pour le libérer. Durant cette phase, la pince de préhension (39) disposée à l'intérieur du bloc dévêtisseur (37) est déplacée en avant sous l'action du vérin (42). Lors de ce déplacement, la pince dont les mors sont écartés, passe à-travers l'entrelacement des brins (B1a) (B1b) (B2) (B3) (B4), ainsi qu'il apparaît figure 8.

B) <u>Tassement de la viande dans le boyau, dépose du noeud sur ce dernier et son serrage sur le produit à ligaturer.</u>

Si l'on se réfère à la figure 8, on a illustré le positionnement de la partie de boyau vide de viande sur le dispositif de chargement (26), après déplacement de celui-ci, afin de présenter ladite partie de boyau entre les mors ouverts de la pince de préhension. On rappelle que cette pince est en position de développement maximum, par suite de l'action du vérin (42). Le vérin (41) intervient alors sur l'articulation du mors mobile de ladite pince, pour le fermer; la partie de boyau étant ainsi enserrée entre les mors (39a - 39b). Simultanément ou successivement, le galet (29a) du dispositif de chargement illustré notamment figure 2, libère le produit à ligaturer. Le vérin (42) agissant sur la pince de préhension (39) se rétracte, ramenant en arrière la pince, près de sa position initiale, dans la zone d'entrelacement des brins, ainsi que le produit à ligaturer (27a) qui est donc séparé du produit suivant (27b) chargé sur le dispositif de chargement. On rappelle, comme illustré figure 8 du dessin, que la pince de préhension (39) avait été déplacée perpendiculairement par rapport à la direction du dispositif serre-fil (2). Cette opération étant effectuée, le vérin (38) est actionné pour provoquer le déplacement du bloc de dévêtissage (37) qui exerce alors une double fonction en agissant d'une part sur le produit à ligaturer et d'autre part sur l'entrelacement des brins de fil.

L'action sur le produit à ligaturer s'effectue de la façon suivante:

par suite du déplacement relatif du bloc de dévêtissage (37) par rapport à la pince de préhension (39), le produit à ligaturer saisi fermement entre les mors de ladite pince, s'engage partiellement par sa partie vide de viande, dans l'ouverture (371) aménagée dans ledit bloc de dévêtissage. De ce fait, le col du produit à ligaturer vient en appui ferme sur la face avant (372) dudit bloc. Cette action, conjuguée avec l'effort de traction exercée par la pince de préhension sur l'extrémité du boyau, provoque le tassement à l'intérieur dudit boyau.

L'action sur l'entrelacement des brins s'effectue de la manière suivante:

Le verin (9) est actionné dans un sens de développement de sa tige, provoquant ainsi la rotation de l'arbre (6) et le renvoi en position initiale des doigts de relevage (7 - 8) qui, par leur profil penté, cessent de retenir les brins de fil en les libérant. Par ailleurs, par suite de son déplacement en avant, le bloc de dévêtissage (37) appuie par sa face avant, sur les brins de fil et les déplace en les dégageant de leur position établie sous les bossages cylindriques (11a1) et (11b3) des barrettes (11a) et (11b), et de l'aile équerrée (14¹) de la lame (14) pour les libérer. Cette phase est illustrée figure 9 des dessins où l'on voit les brins de fil déposés autour de l'objet à ligaturer.

La phase suivante consiste à effectuer le serrage de la ligature ainsi déposée. A cet effet, le vérin (21) est actionné et provoque le déplacement de sa tige et donc du mors mobile (20a) en appui sur le mors fixe (20b), de manière à serrer le fil (17) en interrompant son défilement. Puis, le vérin (23) est actionné et sa tige entraîne vers le bas la plaque (22) dont le bossage cylindrique (22a) appuyant sur le fil (17), provoque l'allongement de la trajectoire de ce dernier, et par suite, le serrage du noeud.

On décrit maintenant la deuxième phase opératoire autorisant le positionnement et la coupe du produit à ligaturer, dans le cas de saucisses fabriquées en chapelet, par exemple.

Avant le chargement, la semelle de chargement (26) est disposée dans la position illustrée figure 2, c'est-à-dire que les vérins (31) et (35) sont en position rétractée. Les galets (29a - 29b) sont en position ouverte pour autoriser le positionnement ultérieur de la partie vide de boyau. Après remplissage, les boyaux présentent des sections pleines de viande et d'autres vides de viande, déterminant ainsi la longueur des saucisses. Les parties vides de viande sont introduites dans les ouvertures en "V" (26c) établies dans les corps (26²) de la semelle de chargement, de façon à ce que les cols formés par les saucisses, entre les parties vides, viennent en appui contre les équerres (28a) et (28b) établies dans le prolongement latéral des corps, assurant ainsi un maintien ferme et stable de la partie vide de viande du boyau. Cette dernière ainsi mise en place est maintenue ensuite enserrée par les galets (29a) et (29b) mis en position par les vérins (30). Le vérin (31) est alors actionné pour déplacer la semelle de chargement (26) à l'intérieur du cadre support (33), vers l'avant, selon une direction perpendiculaire à la trajectoire d'avancement du fil. Lors de cette translation, la lame de coupe (34) sectionne le boyau dans la zone située entre les galets (29a) et (29b); les parties de boyau séparées étant cependant toujours maintenues serrées par lesdits galets. En fin de translation, la partie de boyau située entre l'équerre (28a) et le galet (29a) est présentée entre les mors ouverts de la pince de préhension (39) qui a été avancée sous l'action du vérin (42). Le boyau est alors saisi entre les mors précités et serré, tandis que, simultanément, le vérin (30) commande l'ouverture du galet (29a) libérant ainsi le boyau.

Le galet (29b) reste dans sa position de serrage du produit suivant à ligaturer. Comme illustré figures 2 et 9, le boyau (27a) est entraîné puis ligaturé à la façon décrite précédemment. Après serrage de ce boyau (27a) et durant la phase conduisant à la préparation du noeud suivant, le vérin (35) est actionné et déplace le cadre-support (33) ainsi que la semelle de chargement (26) associée, dans une direction parallèle à la trajectoire de défilement du fil (17) et donc, perpendiculaire au premier mouvement de la semelle de chargement.

A la fin du cycle suivant, lorsque la pince de préhension (39) est déplacée en avant sous l'action du vérin (42), la partie de boyau vide située entre l'équerre (28b) et le galet (29b) est présentée entre les mors de ladite pince (39), saisie et entraînée en arrière dans le bloc de dévêtissage (37), le galet (29b) ayant été préalablement ouvert pour libérer le produit. Les opérations de tassage, dévêtissage et serrage du noeud sont alors effectuées selon les phases opératoires ci-dessus exposées. Simultanément, les verins (31) et (35) sont actionnés pour ramener en position initiale la semelle de chargement, en vue d'un nouveau cycle.

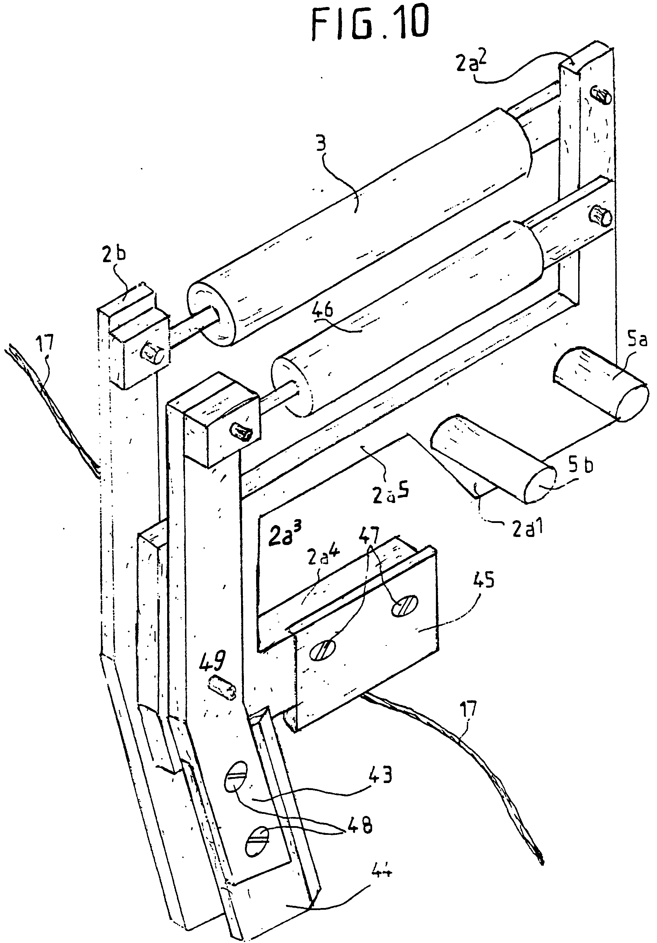

Comme indiqué précédemment, et selon une possibilité de réalisation non exclusive, la machine comprend un dispositif coupe-fil. On a illustré figure 10, le mécanisme de serrage associé au mécanisme coupe-fil.

Les mêmes moyens ont été référencés de manière identique.

Le dispositif serre-fil (2) comprend un mors fixe (2a) et un mors mobile (2b). Le mors fixe (2a) profilé, comprend une partie médiane (2a1) se prolongeant d'un côté et dans le même plan, par une section (2a5) de largeur moindre, puis par une aile (2a3) avec un prolongement horizontal en retour (2a4) définissant la partie mors. La partie médiane (2a1) est aménagée pour recevoir les tiges (5a - 5b) et la tige (4a) du vérin (4) de commande en déplacement du mécanisme serre-fil.

Le mors mobile (2b) se présente sous la forme d'un profilé venant en juxtaposition sur l'une des faces de l'aile (2a3) du mors fixe. Le mors mobile (2b) est solidaire à son extrémité supérieure à la tige du vérin (3), lui-même lié par son point d'attache à l'aile supérieure du mors fixe.

Selon cette variante, le mécanisme coupe-fil est monté sur le mors fixe comme suit:

Un levier (43) est monté à articulation par un axe (49) sur l'aile (2a3) du mors fixe, ledit levier étant solidaire à son extrémité supérieure de la tige (46¹) d'un verin (46), lui-même lié par son point d'attache à l'aile supérieure (2a2) du mors fixe, du côté opposé de préférence, à un point d'attache du vérin (3). Sur l'extrémité inférieure dudit levier (46) est rapportée d'une manière appropriée, une lame de coupe (44) fixée par exemple, au moyen de vis à tête fraisée (48). Par ailleurs, une autre lame de coupe (45) est montée fixement sur la partie mors fixe (2a4). Il apparaît de ce fait, que le développement de la tige du vérin (46) provoque le rapprochement des lames (44, 45) entre elles, assurant ainsi le sectionnement du fil (17).

En liant l'alimentation de ce vérin à une programmation pneumatique ou électronique, on programme le mode d'attache du porduit ligaturé. La coupe peut être effectuée à chaque ligature, ou toutes les deux ligatures, etc...

Il est à observer qu'avec ce dispositif, durant la translation du mécanisme serre-fil, les têtes de crochets (11a-11b) passent dans l'évidement établi entre les parties (2a3 - 2a4 - 2a5) du serre-fil.

Pour assurer l'automatisation complète de la machine, une mémoire de programmation est établie pour assurer l'ensemble des fonctions précitées, selon des cycles variés.

Cette machine permet de ligaturer, au moyen d'un fil et selon un pas préétabli, tous objets creux ou pleins. Un exemple d'application non limitatif a été décrit pour la fabrication de saucisses, saucissons et autres produits similaires.

## Revendications

1. Machine automatique permettant de ligaturer au moyen d'un fil et selon un cycle préétabli, par l'établissement d'un noeud autobloquant dit "cabestan", en particulier autour du boyau, en vue de la fabrication de saucisses, saucissons et autres produits similaires, des automatismes permettant l'approvisionnement en continu du fil de nouage, la mise en tension du fil, la mise en forme du fil pour établir une ligature, la présentation en continu des produits à ligaturer et le guidage du produit à ficeler, le sectionnement des extrémités de chaque produit, le ligaturage de chacune des extrémités et la coupe, ladite machine comprenant un bâti profilé et agencé pour supporter les mécanismes de ladite machine, leurs moyens de guidage et d'articulation, lesdits mécanismes étant caractérisés en ce que:

- Le mécanisme contrôlant l'amenée en continu et la distribution du fil (17) comprend une pièce (20) avec un mors fixe (20b) et mobile (20a) autorisant le déplacement du fil et son serrage en position;
- Le mécanisme assurant le serrage du fil puis son déroulement de l'endroit de serrage vers la zone d'entrelacement parallèlement au plan c'e base vertical du bâti selon une trajectoire rectiligne contrôlée comprend un mors fixe (2a) et un mors mobile (2b) profilés saisissant le fi et étant guidés en déplacement par des moyens (4, 5a, 5b) de guidage;
- Le mécanisme de mise en forme de la ligature comprend deux doigts de relevage (7 - 8) du fil, deux crochets (11a - 11b) pour tirer le fil vers le bas et deux lames (13 - 14) pour tirer les pièces de fil latéralement, autorisant aisini la mise en forme du fil pour la ligature par déformation sucessives et complémentaires de sa trajectoire en vue de ligaturer le produit sous la forme d'un noeud dit cabestan selon une programmation préétablie;
- Le mécanisme assurant la présentation du produit à ligaturer comprenant une semelle de chargement (26) du produit déplaçable jusqu'à présenter le produit près de l'endroit de la ligature et agencé avec un outil de coupe (34) sectionnant le produit à ligaturer préalablement à son transfert et son évacuation dans la zone de ligaturage;
- Le mécanisme de préhension du produit comprenant une pince de préhension (39) se déplaçant perpendiculairement au sens de déplacement du fil et venant à l'intérieur et en débordement d'un bloc de dévêtissage (37) pour la saisie du produit et son introduction dans la zone de ligature par retrait de la pince et tassement du contenu dans le boyau en appui contre ledit bloc;
- Un mécanisme est disposé entre le mécanisme d'amenée du fil et le mécanisme de serrage du fil, assurant une double fonction, selon la position: d'une part, de présentation du fil vers le mécanisme de serrage et d'autre part, de serrage du noeud après dépose de la ligature sur le produit;
- Un outil coupe fil associé avec le mécanisme de serrage du fil.

2. Machine automatique selon la revendication 1, caractérisée en ce que le mécanisme contrôlant l'amenée et la distribution du fil (17) comprend une presse (20) constituée du mors fixe (20b) sur lequel se déroule le fil (17), et fixé au bâti, et le mors mobile (20a) associé à un vérin de commande (21) solidaire d'un plateau supérieur (1c) horizontal, établi sur le bâti (1); le fil (17) en provenance d'une pelote (18) ou équivalent disposée sur un support inférieur (19) lié au bâti (1) pouvant être maintenu serré sous l'action du vérin de commande (21).

3. Machine automatique selon la revendication 1, caractérisée en ce que le mécanisme assurant le serrage du fil puis son déroulement vers la zône d'entrelacement, est disposé parallèlement au plan de base vertical du bâti en étant guidé en déplacement de manière appropriée, par un vérin (4) et tiges (5a - 5b) associées, dans un bloc étagé (1a) du bâti (1); ledit mécanisme comprenant le mors fixe (2a) associé aux tiges (5a) (5b) de guidage rectiligne précitées, et le mors mobile (2b) actionné par un vérin de commande d'ouverture ou de fermeture (3).

4. Machine automatique selon la revendication 3, caractérisée en ce que le mécanisme de serrage du fil puis son déroulement vers la zone d'entrelacement, comprenant le mors fixe (2a) et le mors mobile (2b), est déplaçable transversalement sous l'action du vérin (4), et guidé par les tiges (5a, 5b), le mors fixe comportant une partie médiane se prolongeant à ses extrémités par des ailes orientées, opposées (2a2 -2a3), l'aile (2a3) définissant la partie mors avec un prolongement horizontal (2a4); ledit mors mobile (2b) venant en juxtaposition de l'une des faces de l'aile (2a3) du mors fixe et étant solidarisé à son extrémité supérieure, à la tige d'un vérin (2) de commande lié par son point d'attache à l'aile supérieure du mors fixe.

5. Machine automatique selon les revendications 1, 2, et 3 en semble caractérisé en ce que le mécanisme disposé entre le mécanisme d'amenée du fil et le mécanisme de serrage du fil, ledit mécanisme assurant une double fonction dont la première est de présenter le fil vers le mécanisme de serrage (2) comprend une plaque verticale profilée (22) susceptible de se déplacer en hauteur sous l'action d'un vérin de commande (23) positionné sur le plateau supérieur (1c) du bâti (1), disposée en regard et parallèlement à une paroi verticale (24) du bâti et prolongeant ledit plateau supérieur (1c), ladite paroi présentant sur une partie de sa hauteur une lumière (24a) autorisant le passage du fil (17); ladite plaque (22) présentant dans sa partie supérieure un bossage de renvoi (22a) et de guidage du fil dans une lumière (22b) aménagée dans son épaisseur, et étant en outre agencée avec un bras déporté horizontal (22c) entourant la paroi (24) et recouvrant au moins la largeur de la lumière (24a), le fil prenant appui sur ledit bras (22c).

6. Machine automatique selon la revendication 5, caractérisée en ce que la trajectoire du fil (17) est rectiligne lorsque le mécanisme de présentation du fil est en position haute, sous l'action de rétraction du vérin (23), face au mécanisme de serrage (2) qui a été déplacé en translation vers la zone d'entrelacement du fil, ledit fil (17) étant disposé en avant des organes du mécanisme assurant la mise en forme de la ligature.

7. Machine selon la revendication 1, caractérisée en ce que les doigts de relevage (7 - 8) sont fixés sur un arbre (6) parallèle à la direction de cheminement du mécanisme serre-fil (2) et disposé de part et d'autre d'un doigt fixe (10) lié au bâti, lesdits doigts (7, 8) présentant un profil en "V" formant rampe pour accrocher et maintenir le fil relevé; ledit arbre (6) étant associé à un vérin (9) autorisant sa rotation et celle des doigts (7, 8).

8. Machine selon la revendication 1, caractérisée en ce que les crochets (11a - 11b) sont réalisés sous forme de barrettes profilées, solidarisées à leur partie inférieure d'un plateau (11) haut; la barette (11a) présentant un profil droit délimité à sa partie supérieure par un bossage cylindrique horizontal et avant (11a1); la barrette (11b) présentant au-delà de sa position médiane un déport (11b1) se prolongeant par son extrémité verticale (11b2) disposée dans un plan différent de la barrette (11a) et délimitée par un bossage cylindrique horizontal et avant (11b3); la barrette (11a) étant à gauche du doigt de relevage (7) et la barrette (11b) entre le doigt fixe (10) et le doigt de relevage (8); lesdites barrettes (11a - 11b) étant situées de part et d'autre des lames (13 - 14) et venant en contact avec le fil (17) après relevage des doigts (7 - 8); le déplacement vers le bas desdites barrettes entrainant le fil (17), par les bossages (11a1 - 11b3), selon une trajectoire modifiée.

9. Machine selon la revendication 1, caractérisée en ce que les lames (13 - 14) juxtaposées l'une contre l'autre, sont animées d'un mouvement en translation, opposé, sous l'action de vérins de commande (15 - 16), dans une direction parallèle à la direction de déplacement du mécanisme serre-fil (2); lesdites lames présentant chacune à une extrémité, un aile équerrée (13.1, 14.1), orientée d'une manière opposée l'une par rapport à l'autre; en position repos, les ailes (13.1 - 14.1) se situant dans des plans entre lesquels sont disposés successivement le crochet (11a), le doigt de relevage (7), le doigt fixe (10), le crochet (11b) et le doigt de relevage (8), l'aile (13) présentant en outre, un évidement autorisant le passage du fil et permettant lors du déplacement de la lame (13), l'encastrement du bec de décrochage profilé (43) du fil (17); en position de déplacement latéral, lesdites lames entrainant les brins de fil se trouvant sur leur trajectoire.

10. Machine automatique selon la revendication 1, caractérisée en ce que le mécanisme assurant la préhension du produit à ligaturer et son positionnement à l'intérieur de la zone de ligaturage, comprend une pince de préhension (39) présentant un mors fixe (39a) et un mors mobile (39b) articulé en ouverture-fermeture par un vérin (41), ladite pince pouvant être déplacée dans une direction perpendiculaire au sens du défilement du fil (17) par un vérin (42) venant à l'intérieur et en débordement d'un bloc de dévêtissage (37) jusque dans l'espace libéré par la séparation des lames (13 - 14), jusqu'à saisir le produit.

11. Machine automatique selon les revendications 1, 6, et 10 caractérisée en ce que le mécanisme assurant la dépose de la ligature, comprend le bloc dévêtisseur (37) qui vient en appui sur les brins de fils libérés par le profil penté du doigt fixe (10) le bec de décrochage (43) engagé dans l'évidement approprié de l'aile (13.1) de la lame (13), et le bloc de dévêtissage (37) translaté en avant par son vérin de commande (38) et par le retour en position initiale des doigts (7 - 8).

12. Machine automatique selon les revendications 5, 6, 10 et 11 caractérisée en ce que le mécanisme disposé entre le mécanisme d'amenée du fil et le mécanisme de serrage du fil, exerce une seconde fonction obtenue par l'abaissement de la plaque (22), la pince (20) enserrant fermement le fil (17) dont la trajectoire est augmentée, assurant ainsi le serrage du noeud.

13. Machine automatique selon la revendication 1, caractérisée en ce que le mécanisme de présentation du produit à ligaturer comprend une semelle de chargement (26) à un ou deux corps verticaux, parallèles entre eux, présentant une ouverture dans laquelle est positionnée la partie vide du produit à ligature, des galets (29a - 29b) actionnés par une commande appropriée (30) assurant le serrage en position de la partie vide du produit; ladite semelle de chargement étant déplaçable dans deux directions par des vérins appropriés (31 - 35).

14. Machine selon la revendication 13, caractérisée en ce que la semelle de chargement (26) est disposée à l'intérieur d'un cadre support (33) dans lequel elle peut être déplacée; ledit cadre-support (33) étant agencé pour recevoir un outil de coupe (34) disposé sur la trajectoire de déplacement de la semelle et sectionnant la partie de boyau entre les galets de serrage (29a - 29b); en fin de course de déplacement, ladite partie de boyau découpée étant face à la pince de préhension (39) située dans sa position maximum d'avancement.

15. Machine automatique selon les revendications 1, 10, 11, 13 et 14 ensemble, caractérisée en ce que, lorsque la pince de préhension (39) saisit la partie vide de boyau, en vue du ligaturage, ladite partie est tirée par le retrait de la pince, jusqu'à s'engager partiellement dans le bloc de dévêtissage pour tasser le produit contenu, le ligaturage s'effectuant ensuite.

16. Machine automatique selon les revendications 1 à 15 ensemble, caractérisée en ce qu'elle comprend une lame de coupe du fil agissant après ligaturage, selon un pas préétabli fonction de la succession du produits liés.

17. Machine automatique selon la revendication 3, caractérisée en ce qu'un mécanisme coupe-fil est associé au mécanisme assurant le serrage du fil puis son déroulement vers la zône d'entrelacement, ledit mécanisme coupe-fil comprenant un levier (43) monté à articulation sur l'une des parties du mors fixe, en étant solidarisé à sa partie supérieure, à la tige d'un vérin (46) de commande, lui-même lié par son point d'attache à l'aile supérieure du mors fixe; sur l'extrémité inférieure dudit levier étant rapportée une lame de coupe (44) destinée à venir en regard d'une lame de coupe (45) disposée sur l'extrémité du mors fixe, lors de l'actionnement du vérin (46), en vue du sectionnement du fil (17); la commande du vérin (46) étant programmée pour agir à un pas préétabli.

**Patentansprüche**

1. Automatische Maschine zum Abschnüren, vermittels eines Garns und nach einem vorbestimmten, zyklischen Arbeitslauf, durch die Herstellung eines selbstblockierenden, sogenannten "Kabelwindeknotens", insbesondere um den Darm herum, zum Zweck der Herstellung von Würstchen, Würsten und gleichartigen Produkten, mit automatisierten Vorrichtungen für die kontinuierliche Zuführung des Verschnürengarns, das Verspannen des Garns, die Formgebung des Garns für die Durchführung einer Abschnürung, das kontinuierliche Vorlegen der abzuschnürenden Produkte und die Führung des zuzuschnürenden Produkts, das Abschneiden der Enden jedes Produkts, das Abschnüren jedes einen der Enden und das Zerschneiden, wobei die besagte Maschine ein Gestell zufweist, das zum Tragen der mechanisierten Vorrichtungen der genannten Maschine und der Mittel für die Führung und den gelenkigen Einbau dieser mechanisierten Vorrichtungen, profilierte und einegerichtet ist die durch die folgenden Triebwerke und Bestandteile gekennzeichnet sind:

- das Triebwerk für die Steuerung der kontinuierliche Zuführung und der Verteilung des Garns oder Bindefadens (17), das einen Bauteil (20) mit einer feststehenden Backe (20b) und einer beweglichen Backe (20a) für die Verlagerung des Garns und dessen Einspannen in der richtigen Stellung aufweist;

- das Triebwerk für das Einspannen des Garns und dann das Abwickeln desselben von der Einspannstelle aus nach dem Verkreuzungsbereich, parallel an der senkrechten Grundebene des Gestells gemäss einer gradlinigen kontrollierten Bahn, wobei dieses Triebwerk eine profilierte feststehende Backe (2a) und eine profilierte bewegliche Bahn (2b) aufweist, die das Garn greifen und in ihrer Verlagerung durch die Führungsmittel (4, 5a, 5b) geführt werden;

- das Triebwerk für die Formgebung des Abschnürens, das zwei Anhebefinger (7 - 8) für das Garn, zwei Haken (11a - 11b) zum Ziehen des Garns nach unten und zwei Blätter (13 - 14) zum Ziehen der Garnstücke seitlich aufweist, wobei die Formgebung des Garns für die Abschnürung durch ergänzende und nacheinanderfolgende Verformungen der Garnbahn erfolgt, damit das Produkt nach der Art eines sogenannten Kabelwindeknotens gemäss einer vorbestimmten Programmierung abgeschnürt wird.

- daß Triebwerk für das Vorlegen des abzuschnürenden Produkts, das eine Produktbeschickungsunterlagsplatte (26) aufweist, die bis zum Vorlegen des Produkts in der Nähe der Abschnürungsstelle verschoben werden kann und mit einem Schnittwerkzeug (34) ausgestattet ist, dass das abzuschnürende Produkt vor dessen Verlagerung und Auswurf in den Abschnürungsbereich abschneidet;

- das Produktgreifertriebwerk, das eine Greiferzange (39) aufweist, die senkrecht zur Verlagerungsrichtung des Garns bewegt wird und hinausragend in den Innenraum eines Abstreiferblocks (37) gelangt, um das Produkt zu greifen und das Produkt durch Zurückziehen der Zange in den Abschnürungsbereich einzuführen, wobei der Inhalt in dem gegen den besagten Block abgestützen Darm zusammengedrückt wird.

- ein zwischen dem Garnzuführungstriebwerk und dem Garneinspannungstriebwerk befindliches Triebwerk, das für eine doppelte, stellungsgemässe Funktion vorgesehen ist: einerseits das Vorlegen des Garns gegen das Einspannungstriebwerk, un andererseits das Anziehen des Knotens nach dem Ablegen der Abschnürung auf dem Produkt;

- ein für das Zerschneiden des Garns vorgesehenes Werkzeug, das mit dem Garneinspannungstriebwerk zusammenarbeitet.

2. Automatische Maschine nach Anspruch 1, dadurch gekennzeichnet, dass das Triebwerk für die Steuerung der Zuführung und der Verteilung des Garns (17) eine Presse (20) aufweist, die aus einer feststehenden, auf dem Gestell befestigten Backe (20b) besteht, auf welcher das Garn (17) abgerollt wird, und aus der beweglichen, mit einem Steuerungszylinder (21) zusammenarbeitenden Backe (20a) besteht, wobei der Druckzylinder mit einer waagrechten, auf dem Gestell vorgesehenen Oberplatte (1c) festgemacht ist, und das aus einem auf einem mit dem Gestell verbundenen Niederträger (19) befindlichen Knäuel (18) oder desgleichen kommende Garn unter der Wirkung des Steuerungszylinders (21) festgeklemment gehalten werden kann.

3. Automatische Maschine nach Anspruch 1, dadurch gekennzeichnet, dass das Triebwerk für das Einspannen des Garns und dann das Abrollen desselben nach dem Zwischenkreuzungsbereich parallel an der senkrechten Grundebene des Gestells angebracht ist und in einem abgestuften Block (1a) des Gestells (1) durch einen Druckzylinder (4) und die mitwirkenden Stangen (5a - 5b) verlagerungsweise entsprechend geführt wird, wobei das besagte Triebwerk die feststehende, mit den vorerwähnten Stangen (5a) (5b) für gradlinige Führung mitwirkende Backe (2a), sowie die bewegliche Backe (2b) aufweist, die durch einen Steuerzylinder (3) zum Öffnen und Schliessen betätigt wird.

4. Automatische Maschine nach Anspruch 3, dadurch gekennzeichnet, dass das Triebwerk für das Einspannen des Garns und dann das Abrollen dieses Garns nach dem Zwischenkreuzungsbereich, das die feststehende Backe (2a) und die bewegliche Backe (2b) aufweist, unter der Betätigung des Druckzylinders (4) und mit Führung durch die Stangen (5a, 5b) in der Quere verschoben werden kann, wobei die feststehende Backe einen mittigen Teil aufweist, der an dessen Enden durch orientierte, entgegengesetzte Schenkel (2a2 - 2a3) verlängert wird, und der eine Schenkel (2a3) den Backenteil mit einer waagrechten Verlängerung (2a4) bildet, indem die genannte bewegliche Backe (2b) in Nebeneinanderliegen mit der einen der Flächen des Schenkels (2a3) der feststehenden Backe kommt und an deren Oberende mit der Stange eines Betätigungszylinders (2) festgemacht ist, der durch dessen Befestigungspunkt mit dem Oberschenkel der feststehenden Backe verbunden wird.

5. Automatische Maschine nach den Ansprüchen 1, 2, und 3 zusammen, dadurch gekennzeichnet, dass das zwischen dem Garnzuführungstriebwerk und dem Garneinspannungstriebwerk angebrachte Triebwerk, das für eine doppelte Funktion, mit als erste Funktion das Vorlegen des Garns gegen das Einspanntriebwerk (2), vorgesehen ist, eine profilierte senkrechte Platte (22) aufweist, die unter der Wirkung eines auf der Oberplatte (1c) des Gestells (1) positionierten Betätigungszylinders (23) höhenverschiebbar und parallel und entgegengesetzt einer senkrechten Wandung (24) und in Verlängerung der besagten Oberplatte (1c) angebracht ist, wobei die besagte Wandung auf einem Teil deren Höhe eine Öffnung (24a) aufweist, die das Durchlassen des Garns (17) gestattet, und die besagte Platte (22) in deren Oberteil eine Nase für die Ablenkung (22a) und die Führung des Garns in eine Öffnung (22b), die in der Stärke versetzten waagrechten, die Wandung (24) umfassenden und am wenigstens die Breite der Öffnung (24a) überdeckenden Arm (22c) versehen ist, indem das Garn auf dem besagten Arm (22c) abgestützt wird.

6. Automatische Maschine nach Anspruch 5, dadurch gekennzeichnet, dass die Bahn des Garns (17) bei der Stellung des Garnvorlegentriebwerks in der Höhe geradelinig ist, unter der Rückführungswirkung des Druckzylinders (23) gegenüber dem Einspanntriebwerk (2), das in Verlagerung nach dem Zwischenkreuzungsbereich des Garns bewegt werden ist, wobei das besagte Garn (17) vor den Organen des Triebwerks für die Formgebung der Abschnürung angeordnet wird.

7. Automatische Maschine nach Anspruch 1, dadurch gekennzeichnet, dass die Anhebefinger (7 - 8) parallel an der Kriechrichtung des Garneinspannungstriebwerks (2) und beiderseits eines feststehenden, mit dem Gestell verbundenen Finger (10) angebracht und auf einer Welle (6) befestigt sind, wobei die besagten Finger (7, 8) einen V-förmigen Profil zur Bildung einer Rampe für das Einhaken und das Festhalten des angehobenen Garns aufweisen, und die besagte Welle (6) mit einem Druckzylinder (9) zusammenarbeitet, der die Umdrehung der Welle sowie die Umdrehung der Finger (7, 8) gestattet.

8. Maschine gemäss Anspruch 1, dadurch gekennzeichnet, dass die Haken (11a - 11b) als profilierte, am Unterteil mit einer Platte (11) festgemachte Stäbchen ausgebildet sind, wobei die Platte (11) mit einem Betätigungshebel (12) für Auf- und Abbewegung zusammenarbeitet, und das Stäbchen (11a) einen geraden Profil aufweist der an dessen Oberteil durch eine waagrechte, zylindrische Vordernase (11a1) abgegrenzt ist; dass das Stäbchen (11b) jenseits dessen mittiger Stellung einen versetzten Abschnitt (11b1) aufweist, der durch das senkrechte Ende (11b2) dieses Stäbchens verlängert sird, wobei dieses senkrechte Ende in einer von der Ebene des Stäbchens (11a) unterschiedlichen Ebene vorgesehen und durch eine waagrechte zylindrische Vordernase (11b3) abgegrenzt ist; dass das Stäbchen (11a) an der linken Seite des Anhebefingers (7) und das Stäbchen (11b) zwischen dem feststehenden Finger (10) und dem Anhebefinger (8) vorgesehen sind; und dass die genannten Stäbchen (11a - 11b) beiderseitig der Blätter (13 - 14) gelegen sind und nach dem Anheben der Finger (7 - 8) in Berührung mit dem Garn (17) kommen, wobei das Garn (17), vermittels der Nasen (11a1 - 11b3), durch das Verschieben der genannten Stäbchen gemäss einer veränderten Bahn mitgenommen wird.

9. Maschine nach dem Anspruch 1, dadurch gekennzeichnet, dass die aneinanderliegenden Blätter (13 - 14), unter der Wirkung von Betätigungszylindern (15 - 16), durch eine entgegengesetzte Verlagerungsbewegung in einer an der Bewegungsrichtung des Garneinspanntriebwerks (2) parallelen Richtung verschoben werden, wobei jedes eine der genannten Blätter an dem einen Ende mit einem rechtwinkligen Schenkel (13.1-14.1) versehen wird, mit einer entgegengesetzten Orientierung dieser Schenkel zueinander; dass diese Schenkel (13.1-14.1) in der Ruhelage in den Ebenen liegen, zwischen welchen verschiedene Bauteile nacheinanderfolgend vorgesehen sind, und zwar: der Haken (11a), der Anhebefinger (7), der feststehende Finger (10), der Haken (11b) und der Anhebefinger (8); und dass der Schenkel (13) darüber hinaus eine Aussparung aufweist, die das Durchlassen des Garns gestattet und bei der Verschiebung des Blatts (13) das Einfügen der profilierten Spitze (43) für das Loshaken des Garns (17) ermöglicht, wobei die genannten Blätter, in der Stellung der seitlichen Verschiebung, die in der Bahn dieser Blätter befindlichen Garnfasern mitnehmen.

10. Automatische Maschine nach Anspruch 1, dadurch gekennzeichnet, dass das Triebwerk für das Greifen des abzuschnürenden Produkts und das Positionieren desselben in dem Innenraum des Abschnürungsbereichs eine Greiferzange (39) aufweist, die mit einer feststehenden Backe (39a) sowie mit einer beweglichen Backe (39b) versehen ist, die für Öffnen-Schliessen vermittels eines Druckzylinders (41) gelenkig angeordnet wird, wobei die besagte Zange durch einen Druckzylinder (42) in einer der Richtung des Ablaufens des Garns (17) senkrechten Richtung verschoben werden kann, um in den Innenraum und daraus hinausragend eines Abstreiferblocks (37) bis zu dem durch das Trennen der Blätter (13 - 14) freigemachten Raum und bis zum Greifen des Produkts zu kommen.

11. Automatische Maschine nach den Ansprüchen 1, 6 und 10, dadurch gekennzeichnet, dass das Triebwerk für das Ablegen der Abschnürung die folgenden Bauteile aufweist: den auf die von dem geneigten Profil des feststehenden Fingers (10) freigemachten Garnfaser zur Abstützung kommenden Abstreiferblock (37); die in die geeignete Aussparung des Schenkels (13.1), des Blatts (13) eingreifende Aushakenspitze (43); wobei der Abstreiferblock (37) durch dessen Betätigungszylinder (38) und die Rückführung der Finger (7 - 8) auf die Anfangsstellung nach vorne verlagert wird.

12. Automatische Maschine nach den Ansprüchen 5, 6, 10 und 11, dadurch gekennzeichnet, dass das zwischen dem Garnzuführungstriebwerk und dem Garneinspanntriebwerk befindliche Triebwerk eine zweite Funktion ausübt, die durch das Senken der Platte (22) erreicht wird, wobei die Zange (20) das Garn (17) bei Mehrung dessen Bahn festklemmt, damit das Festziehen des Knotens gesichert wird.

13. Automatische Maschine nach Anspruch 1, dadurch gekennzeichnet, dass das Triebwerk für das Vorlegen des abzuschnürenden Produkts eine aus einem senkrechten Körper oder aus zwei zwischeneinander parallellaufenden senkrechten Körpern bestehende Beschickungsunterlagsplatte (26) mit einer darin vorgesehenen Öffnung aufweist, in welcher der leere Abschnitt des abzuschnürenden Produkts positioniert wird, wobei dieser leere Abschnitt des Produkts mittels der von einer geeigneten Steuerung (30) betätigten Rollen (29a - 29b) in seiner Stellung festgeklemmt ist, und die genannte Beschickungsunterlagsplatte in zwei Richtungen durch geeignete Druckzylinder (31 - 35) verschoben werden kann.

14. Maschine nach Anspruch 13, dadurch gekennzeichnet, dass die Beschickungsunterlagsplatte (26) verschiebbar in dem Innenraum eines Tragrahmens (33) vorgesehen ist, der zur Aufnahme eines auf der Verschiebungsplattenbahn befindlichen, den Darmteil zwischen den Klemmrollen zerschneidenden Schnittwerkzeugs (34) eingerichtet ist, wobei der genannte zerschnittene Darmteil, bei der Beendigung der Verschiebbewegung, sich gegenüber der in die äusserste Vorwärtsstellung vorgeschobenen Greiferzange (39) befindet.

15. Automatische Maschine nach den Ansprüchen 1, 10, 11, 13 und 14 zusammen, dadurch gekennzeichnet, dass beim Greifen des leeren Darmteils für die Abschnürung durch die Greiferzange (39), die besagte Zange durch die Rückwärtsbewegung der Zange bis zum teilweisen Eingreifen in den Abstreiferblock gezogen wird, um das enthaltene Produkt zusammenzudrücken, wobei das Abschnüren nachher stattfindet.

16. Automatische Maschine nach den Ansprüchen 1 bis 15 zusammen, dadurch gekennzeichnet, dass diese Maschine ein Garnschnittblatt aufweist, das nach dem Abschnüren und gemäss einem vorbestimmten Arbeitsverhältnis entsprechend der Reihenfolge der abgeschnürten Produkte wirksam wird.

17. Automatische Maschine nach dem Anspruch 3, dadurch gekennzeichnet, dass mit dem Triebwerk für das Festklemmen des Garns und dann das Abrollen desselben nach dem Aufwickelnbereich ein Garnzerschneidentriebwerk zusammenarbeitet, das einen auf den einen der Teile der feststehenden Backe gelenkig montierten, am Oberteil mit der Stange eines Betätigungszylinders (46) festgemachten Hebel (43) aufweist, wobei der besagte Zylinder, an dessen Befestigungspunkt, wiederum mit dem Oberschenkel der feststehenden Backe verbunden wird; und dass auf dem Niederende des genannten Hebels ein Schnittblatt (44) angebaut ist, um in Gegenüberstellung zu einem auf dem Ende der feststehenden Backe befindlichen Schnittblatt (45) zu kommen, wobei diese Gegenüberstellung bei der Betätigung des Druckzylinders (46) für das Abschneiden des Garns (17) eingenommen wird, und die Steuerung des Druckzylinders (46) zur Wirkung gemäss einem vorbestimmten Arbeitsverhältnis entsprechend programmiert wird.

**Claims**

1. Automatic machine for binding and ligaturing, by means of a yarn and in accordance with a pre-established cycle, and by making a self-locking knot of the "windlass" type, more particularly round the gut casing, for the manufacture of sausages, wet sausages and like products, with automatisms permitting the continuous supply of the knotting yarn, the tensioning of said yarn, the shaping of the yarn for establishing a ligature, the continuous holding out of the products to be ligatured and the guiding of the product to be tied up, the severing of the ends of each product, the binding or ligaturing of each one of the ends and the cutting off, said machine including a framework which is shaped and adapted to support the mechanisms of said machine, as well as the guiding and the linking means thereof, said mechanisms being characterized in that:

- the mechanism for controlling the continuous supply and the distribution of the yarn (17) comprises a part (20) with a fixed jaw (20b) and a movable jaw (20a), permitting the yarn to be shifted and clamped in position;
- the mechanism which provides the clamping of the yarn and then the unthreading thereof from the clamping location toward the intertwining area parallel to the vertical basic plane of the framework along a controlled rectilinear path comprises a fixed jaw (2a) and a movable jaw (2b) which are shaped to grip the yarn while being guided in their movement by guiding means (4, 5a, 5b);
- the mechanism for shaping the binding or ligature comprises two fingers (7 - 8) for lifting up the yarn, two hooks (11a-11b) for pulling the yarn downwardly, and two blades (13 - 14) for pulling the pieces of yarn laterally, permitting thereby the yarn to be put into shape for the binding or ligaturing by means of successive and complementary distortions of the path thereof in order to bind or ligature the product in the form of a so-called windlass knot in accordance with a pre-established programming;
- the mechanism for holding out the product to be ligatured, comprising a product loading base plate (26) which can be shifted until the product is brought adjacent to the binding or ligaturing point is provided with a cutting off tool (34) severing the product to be ligatured prior to the transferring and the discharge thereof in the binding or ligaturing area;
- the product gripping mechanism, comprising grasping pincers (39) shifted at right angles to the direction of movement of the yarn, is moved inside a stripping block (37) and in projection relative thereto for grasping the product and introducing it into the binding or ligaturing area by means of the backward motion of the pincers and the squeezing of the content within the gut casing which is abutted against said block;
- there is provided, between the yarn supply mechanism and the yarn clamping mechanism, a mechanism having a double purpose in accordance with the position: on the one hand, holding out the yarn toward the clamping mechanism, and on the other hand, tightening of the knot after the ligature has been placed on the product;
- a yarn-cutting tool is provided associated with the yarn clamping mechanism.

2. Automatic machine as claimed in Claim 1, characterized in that the mechanism controlling the supply and the distribution of the yarn (17) includes a press (20) consisting of the fixed jaw (20b) on which the yarn (17) is unwound, this fixed jaw being secured to the framework, and of the movable jaw (20a) associated with a control pressure cylinder (21) integral with the horizontal top plate (1c), established on the framework (1), whereby the yarn (17) paid out from a ball (18) or the like disposed on a lower support (19) connected with the framework (1) can be maintained in a stretched manner under the action of the control pressure cylinder (21).

3. Automatic machine as claimed in Claim 1, characterized in that the mechanism for tightening the yarn and then for the unwinding thereof toward the intertwining area is disposed parallel to the vertical base plane of the framework while being guided conveniently in the movement thereof by a pressure cylinder (4) and the rods (5a - 5b), which are associated, within a stepped block (1a) of the framework (1), said mechanism including the fixed jaw (2a) associated with the rods (5a) (5b) aforesaid, which provide the recilinear guiding, and the movable jaw (2b) actuated by an opening and closing pressure cylinder (3).

4. Automatic machine as claimed in Claim 3, characterized in that the mechanism for tightening the yarn and then for the unwinding thereof toward the intertwining area, including the fixed jaw (2a) and the movable jaw (2b), can be shifted transversely under the action of the pressure cylinder (4), and guided by the rods (5a, 5b), the fixed jaw having a medial portion which is extended at the ends thereof by opposite directed wings (2a2 - 2a3), the wing (2a3) defining the jaw portion with a horizontal extension (2a4), said movable jaw (2b) coming in juxtaposition to one of the faces of the wing, (2a3) of the fixed jaw while being made integral at the upper end thereof with the rod of a control pressure cylinder (2) connected through the fastening point thereof to the upper wing of the fixed jaw.

5. Automatic machine as claimed in Claims 1, 2, and 3 together, characterized in that the mechanism disposed between the yarn supply mechanism and the yarn clamping mechanism, aud providing a double function the first of which is to hold out the yarn toward the clamping mechanism (2), includes a contoured vertical plate (22) capable of being shifted vertically under the action of a control pressure cylinder (23) positioned on the upper plate (1c) of the framework (1), said plate being disposed in front of and parallel to a vertical wall (24) of the framework and extending said upper plate (1c), said wall being provided on a portion of its length with an aperture (24a) for the passage of the yarn (17), said plate (22) being provided in the upper portion thereof with a counter-boss (22a) for guiding the yarn within an aperture (22b) arranged within the thickness thereof, said plate (22) being moreover provided with an offset horizontal arm (22c) surrounding the wall (24) and covering at least the width of the aperture (24a), the yarn being abutted on said arm (22c).

6. Automatic machine as claimed in Claim 5, characterized in that the path of the yarn (17) is rectilinear when the yarn holding out mechanism is in the raised position, under the action of retraction of the pressure cylinder (23), in front of the tightening mechanism (2) which has been shifted in translation toward the yarn intertwining area, said yarn (17) being disposed ahead of the organs of the mechanism by means of which the binding or ligature is put into shape.

7. Automatic machine as claimed in Claim 1, characterized in that the lifting fingers (7 - 8) are secured to a shaft (6) parallel to the pathway of the yarn tightening mechanism (2) and disposed on either side of a fixed finger (10) connected with the framework, said fingers (7, 8) having a U-shaped contour which forms a ramp for hooking and maintaining the uplifted yarn, said shaft (6) being associated with a pressure cylinder (9) permitting the rotation of the shaft and of the fingers (7, 8).

8. Machine as claimed in Claim 1, characterized in that the hooks (11a - 11b) are made in the form of contoured small bars, and are made integral at the lower portion thereof with a plate (11) associated for vertical shifting with a control pressure cylinder (12), the small bar (11a) having a straight shape delimited at the upper end thereof by a front horizontal cylindrical boss (11a1), the small bar (11b) having beyond the medial portion thereof an offsetting (11b1) extended by the vertical end (11b2) thereof disposed within a plane different from the small bar (11a) and delimited by a front horizontal cylindrical boss (11b3), the small bar (11a) being on the left side of the uplifting finger (7) and the small bar (11b) being between the fixed finger (10) and the uplifting finger (8), said small bars (11a - 11b) being located on either side of the blades (13 - 14) and coming into contact with the yarn (17) when the fingers (7 - 8) have been lifted up, the yarn (17), through the intermediary of the bosses (11a1 - 11b3), being driven along a modified pathway by the downward motion of said small bars.

9. Machine as claimed in Claim 1, characterized in that the blades (13 - 14) in juxtaposition against one another are moved by an opposite movement of translation under the action of control pressure cylinders (15 - 16), in a direction parallel to the direction of movement of the yarn clamping mechanism (2), said blades being provided each one, at one end, with a squared wing (13.1, 14.1) directed in an opposite manner to one another, the wings (13.1 - 14.1), in the position of rest, lying within planes between which are disposed in succession the hook (11a), the uplifting finger (7), the fixed finger (10), the hook (11b) and the uplifting finger (8), the wing (13) being moreover provided with a recess for the passage of the yarn, said recess permitting, when the blade (13) is moved, the engagement of the contoured unhooking nose (43) of the yarn (17), said blades, in the position of lateral shifting, driving away the yarn strands which are lying on the pathway of the blades.

10. Automatic machine as claimed in Claim 1, characterized in that the mechanism for gripping the product to be ligatured and for positioning same within the binding or ligaturing area is comprised of gripping pincers (39) having a fixed jaw (39a) and a movable jaw (39b) linked hingedly for opening-closing by a pressure cylinder (41), whereby said pincers can be shifted in a direction at right angles to the unthreading direction of the yarn (17) by a pressure cylinder (42) coming inside a stripping block (37) and in projection therefrom up to within the space having been made free by the blades (13 - 14), the pincers being so shifted until the product is grasped.

11. Automatic machine as claimed in Claims 1, 6 and 10, characterized in that the mechanism for setting the ligature includes the stripping block (37) which comes in abutment on the yarn strands having been made free by the slanting shape of the fixed finger (10), the unhooking nose (43) engaged within the suitable recess of the wing (13.1) of the blade (13), the stripping block (37) being translated forwardly by the control pressure cylinder (38) thereof and by the return of the fingers (7 - 8) to the initial position.

12. Automatic machine as claimed in Claims 5, 6, 10 and 11, characterized in that the mechanism disposed between the yarn supply mechanism and the yarn clamping mechanism provides a second function which is obtained by the lowering of the plate (22), the pincers (20) enclosing tightly the yarn (17), the pathway of which is then increased, and the knot being tightened thereby.

13. Automatic machine as claimed in Claim 1, characterized in that the mechanism for holding out the product to be ligatured includes a loading base plate (26) with one or two vertical bodies, parallel to one another, forming an opening in which the empty portion of the gut casing to be ligatured is positioned, the clamping in position of the empty portion of the product being provided by rollers (29a - 29b) actuated by means of a suitable control (30), said loading base plate being movable in both directions by means of suitable pressure cylinders (31 - 35).

14. Machine as claimed in Claim 13, characterized in that the loading base plate (26) is disposed within a supporting frame (33) inside which this base plate can be moved, said supporting frame (33) being adapted to receive a cutting off tool (34) disposed on the pathway of movement of the base plate and severing the portion of the gut casing between the clamping rollers (29a - 29b), the said cut off gut casing portion, at the end of the stroke of movement, being in front of the gripping pincers (39) situated in the maximal position of forward motion thereof.

15. Automatic machine as claimed in Claims 1, 10, 11, 13 and 14 together, characterized in that when the empty gut casing portion is grasped by the gripping pincers (39) for the binding or ligaturing, said portion is pulled by the retraction of the pincers until this portion is partly engaged into the stripping block, so that the product contained will be squeezed, the binding or ligaturing being performed thereafter.

16. Automatic machine as claimed in Claims 1 to 15 together, characterized in that this machine includes a yarn cutting blade operational after the ligaturing, in accordance with a pre-established rate depending on the succession of the ligatured products.

17. Automatic machine as claimed in Claim 3, characterized in that a yarn-cutting mechanism is associated with the mechanism for clamping the yarn and then for unwinding it toward the intertwining area, said yarn-cutting mechanism including a lever (43) mounted hingedly on one of the parts of the fixed jaw, and integral at the upper end thereof with the rod of a control pressure cylinder (46), which is in turn connected through the fastening point thereof to the upper wing of the fixed jaw, a cutting off blade (44) being inserted on the lower end of said lever and adapted to come opposite a cutting off blade (45) disposed on the end of the fixed jaw, when the pressure cylinder (46) is actuated, in order to provide the severing of the yarn (17), the control of the pressure cylinder (46) being programmed for an actuation in accordance with a pre-established rate.

# FIG.1

# FIG. 2

EP 0 080 422 B1

FIG.3

FIG.4

FIG.5

FIG.6

EP 0 080 422 B1

FIG.7

FIG.8

FIG.9

# FIG.10